# EUROPEAN PATENT SPECIFICATION

(11) **EP 2 770 798 B1**
(45) Date of publication and mention of the grant of the patent: **28.03.2018**
(21) Application number: 13155898.3
(22) Date of filing: 20.02.2013
(51) Int. Cl.: H04W 76/04, H04W 4/02

(54) **Multi-network terminal-proximity discovery using joint spectrum**
Entdeckung der Nähe von Mehrfachnetzwerkendgeräten mit gemeinsamem Spektrum
Découverte multi-réseau de proximité de terminal utilisant un spectre de joint

(43) Date of publication of application: 27.08.2014
(73) Proprietor: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: Pais, Adrian Victor, 2281 BA Rijswijk (NL); Jorguseski, Ljupco, 2282 TR Rijswijk (NL)
(74) Representative: Wuyts, Koenraad Maria

(56) References cited:
- EP-A1- 2 408 234
- WO-A1-2012/114161
- WO-A1-2012/152224
- US-A1- 2011 258 327
- US-A1- 2012 077 510

## Description

### FIELD OF THE INVENTION

The invention relates to a method of proximity discovery between a first mobile communication device and a second mobile communication device. The invention also relates to a mobile communication device configured to be used in a method of the invention and to control software for configuring a mobile communication device for use in a method of the invention.

### BACKGROUND ART

The expression "Long Term Evolution", abbreviated to the acronym LTE, is a standard for wireless communication of high-speed data for mobile communication devices such as mobile phones and mobile data terminals. LTE is a successor to the GSM/EDGE and UMTS/HSPA network technologies, increasing the capacity and throughput using new radio access techniques. The standard is developed by the 3rd Generation Partnership Project (3GPP). For background on LTE see, e.g., *Technical White Paper "*Long Term Evolution (LTE): A Technical Overview", Motorola, 2007*.*

Recent developments in LTE relate to so-called Direct LTE, or: "Device-to-Device" (D2D), communication. In D2D communication, the communication path between two mobile communication devices is either a direct path or a path including the serving base station as an intermediate node between the two mobile communication devices, and it does not include the core network nodes (e.g., the code nodes connected to the serving base stations) of the communication network. Usually, each mobile communication device involved in a D2D session still maintains a signaling connection with the communication network. See, e.g., *"*Design Aspects of Network Assisted Device-to-Device Communications", Gabor Fodor et al., IEEE Communications Magazine, March 2012, pp. 170-177.

Maintaining the signaling connection with the communication network enables the communication network to control resources assigned to the D2D communication link. Control of resources assigned to the D2D communication link allows avoiding excessive radio interference between D2D sessions and the regular communication sessions via the communication network. For example, radio interference can be avoided by means of assigning non-overlapping time-frequency resources to the D2D sessions and to the communication sessions that run via the communication network, and/or by means of controlling the transmission power of the D2D communication link, etc. In essence, this also implies that the scarce frequency spectrum available can be utilized with high efficiency.

Maintaining the signaling connection with the communication network also enables the communication network to control mobility and session control signaling between the mobile communication devices operating in the D2D mode and the communication network. During a D2D session, at least one of the mobile communication devices has preferably a signaling connection with the network in order to exchange signaling messages related to, e.g., reconfiguring the D2D communication link, switching between D2D communication and regular communication via the communication network, enabling handover to neighbor cells due to mobility, etc. Note that there might be special cases (e.g., in public safety applications) wherein both mobile communication devices involved in the D2D communication do not have network coverage as provided by their operator, whereas these mobile communication devices still can use D2D communication. In this case, it is not possible to have a signaling connection with the communication network associated with the D2D communication link.

In order to establish D2D communication, the two mobile communication devices (or: terminals) need to discover that they are within each other's vicinity and that they are eligible for setting-up a D2D communication link. This discovery is controlled by a so-called "D2D terminal discovery procedure".

It is easier to implement D2D terminal discovery and to control the setting-up of a D2D communication session between mobile communication devices that are connected to a communication network of the same operator ("single operator"-scenario), than it is between mobile communication devices which are connected to different communication networks of different operators ("multi operators"-scenario). For completeness, it is remarked here that, in practice, a single operator typically owns a single network. If a single operator were to own two or more different networks, and if the D2D terminal discovery and the control of the setting-up of a D2D communication session were to involve different networks of the single operator, the "multi-operators"-scenario would apply.

In the "single operator"-scenario, spectrum management, mobility management, and session management are all conducted within a single domain wherein information for making decisions is readily available. Also, in the "single operator"-scenario, the discovery and selection of a mobile communication device, with which to set up a D2D communication session, can readily be assisted by the capabilities of the communication network. Such capabilities include identifying and tracking the geographic location of mobile communication devices that need D2D links by means of logging, e.g. tracking area codes and localization information. In the "single operator"-scenario, a single communication network allocates and manages resources (e.g., physical resource blocks) for D2D communications, in order to ensure that interference between the D2D communication links and the links for communicating via the communication network can be managed. See, e.g., 3GPP TR 22.803, "Feasibility Study for Proximity Services (ProSe), (Release 12)", V0.2.0, February, 2012.

In a "multi operators"-scenario, the D2D discovery and selection procedure, as well as the setting-up of a D2D communication link, are more challenging, as different network operators use different frequency spectra and the mobility state and other attributes of the terminals may not readily be available to, known by, or shared between different network operators. For completeness, it is remarked here that the expression "mobility state of a mobile communication device" refers to the granularity of the information about the user's geographic location as known at the side of the communication network with which the user has registered. Consider for example a mobile phone network. In *IDLE*-mode, the mobile communication device is just camping on a particular cell of the communication network and there is no communication session ongoing between the mobile communication device and the communication network .The communication network then knows the geographic location of the mobile communication device on a so-called location area level (e.g., a cluster of cells, typically few tens or hundreds cells, grouped in a single geographical area). In ACTIVE-mode, the mobile communication device is involved in an ongoing communication session (e.g., voice communication, video streaming, browsing the Internet, etc.). Then, the communication network has information about the geographic location of the mobile communication device at the cell level. A cell refers to the coverage area of a particular geographical sector served by a particular base station, and a typical base station covers three or more such geographical sectors.

Consider a first mobile communication device of a first user that is communicatively connected to a first communication network, and a second mobile communication device of a second user that is communicatively connected to a second communication network, different from the first communication network. The mobile communication devices may be registered with the communication networks. The first mobile communication device and the second communication device are registered as being associated. That is, the first communication device and the second communication device would like to get informed that they can establish a D2D communication link whenever it is possible. In a social networking scenario the end-users of the communication devices may be registered instead, e.g. as buddies. The invention is not limited to a social network scenario. To enable the D2D communication link the first mobile communication device and the second mobile communication device need to discover that they are in each other's proximity.

In the social networking scenario the term "buddy service" may be used within a telecommunications context to refer to a specific social networking service. The buddy service is typically provided to registered users of electronic communications equipment, such as mobile telephones and network-enabled palmtop computers, etc. The buddy service may alert a first user to the fact that a second user, who is listed with the buddy service as a buddy of the first user, is currently located within a pre-determined distance from the geographic location of the first user. The buddy service may determine the geographic locations of a mobile communication device based on, e.g., identifying in which cell of a mobile telephone network the communication device is currently located based on the location of the base station of the mobile telephone network that receives the strongest signal from the mobile device, or on triangulation of the signals from the device received at multiple base stations.

Network-assisted proximity discovery for enabling D2D communication sessions is addressed in, e.g., US patent application publication 2011/0268101 of Wang et al., titled *"TRANSMISSION AND RECEPTION OF PROXIMITY DETECTION SIGNAL FOR PEER DISCOVERY".* US patent application publication 2011/0268101 discloses techniques for performing peer discovery to enable peer-to-peer (P2P) communication. In an aspect, a proximity detection signal used for peer discovery may be generated based on one or more physical channels and/or signals used in a wireless network. In one design, user equipment (UE) may generate a proximity detection signal occupying at least one resource block based on a SC-FDMA modulation technique. In another design, the UE may generate a proximity detection signal occupying at least one resource block based on an OFDMA modulation technique. The UE may generate SC-FDMA symbols or OFDMA symbols in different manners for different physical channels. In yet another design, the UE may generate a proximity detection signal including a primary synchronization signal and a secondary synchronization signal. For all designs, the UE may transmit the proximity detection signal to indicate its presence and to enable other UEs to detect the UE. However, US patent application publication 2011/0268101 does not address the "multi operator"-scenario.

Network-assisted proximity discovery for enabling D2D communication sessions is also addressed in, e.g., US patent application publication 2011/0258327 of Phan et al., titled *"D2D COMMUNICATIONS CONSIDERING DIFFERENT NETWORK OPERATORS".* US patent application publication 2011/0258327 discloses maintaining a database of registration information associating mobile communication devices with cells. The cells of the different network operators overlap in a particular geographic area, referred to as the "D2D registration area". Any mobile communication device entering the D2D registration area and desiring to engage in D2D communications is expected to register to a DRSF server, whether to initiate same or to be paged for D2D communications as initiated by another device. The acronym "DRSF" stands for "D2D Registration Server Function". Consider a first mobile communication device that is registered with a first network operator, and a second mobile communication device that is registered with a second network operator, and assume that both the first mobile communication device and the second mobile communication device are present within the D2D registration area. The registration information for the first mobile communication device associates the first mobile communication device with a first cell under control of the first network operator, and the registration information for the second mobile communication device associates the second mobile communication device with a second cell under control of the second network operator. In response to an inquiry from the first network operator that the first mobile communication device desires direct communications with the second mobile communication device, the registration information is used to coordinate between the first network operator and the second network operator in order to facilitate establishment of a direct communication link between the first mobile communication device and the second mobile communication device. In various embodiments the facilitating is enhancing the inquiry/page by adding a cell ID of the cell of the first mobile communication device and adding pre-allocated radio resources in the cell for use by the second mobile communication device in responding to the page, and determining a single network which is not highly loaded and which can allocate resources for the D2D communications and directing one or both of the first mobile communication device and the second mobile communication device to that single network.

The approach described in US patent application publication 2011/0258327 has several drawbacks.

A first drawback resides in the fact that the DRSF database information and D2D registration areas have to be agreed upon beforehand by the different network operators. Moreover, individual configuration within a mobile operator's network, e.g., to enable updating of the D2D registration area, will be needed as well as broadcasting the identifiers of the D2D registration area so that each mobile communication device can monitor the identifiers of the relevant D2D registration areas and report if the mobile communication device changes from one D2D registration area to another.

A second drawback resides in the fact that there is no mechanism proposed for informing a mobile communication device, registered with a first communication network, that a specific other mobile device registered with another communication network, is within range for D2D communication, and vice versa. The concept proposed in US patent application publication 2011/0258327 is based on the premise that one of the first mobile communication device and the second mobile communication device itself tries to initiate the process for establishing a D2D connection.

A third drawback resides in the fact that the D2D registration areas are static and pre-determined. Consider a case wherein a pair of mobile communication devices, registered with different communication networks, are within D2D range of each other and in neighboring, D2D registration areas. The approach disclosed in US patent application publication 2011/0258327 does not work in case the two mobile communication devices are in different D2D registration areas, although the two mobile communication devices are within D2D range of each other.

International application WO 2012/114161 A1 of Steer et al. describes devices and methods for determining the proximity of client nodes within a wireless-enabled communication environment. A first client node comprises a database containing identification data associated with a plurality of wireless network access nodes and fingerprint data (location related) associated with the client node and a plurality of second client nodes. As the fingerprint information is updated, it is processed by the first client node to identify second client nodes that have matching, or similar, fingerprint information. Those that do are determined to be within a viable D2D range. WO 2012/114161 does not address the multi-operator situation where different networks and their associated client nodes use different frequency spectrums.

European patent application EP2408324 A1 of Koskela describes a method and apparatus for device initiated offloading to unlicensed bands in D2D communications. The method comprises D2D communicating by a first device with a second device on a licensed band, Then the first device determines whether unlicensed band resources are available, and if the unlicensed band resources are available, initiating by the first device a set-up of a D2D communication on the unlicensed band. The offloading can comprise user plane data where control plane data remains in the licensed band, but also control plane data may be offloaded to the unlicensed band.

There is a need for an alternative proximity discovery procedure for enabling D2D communication that does not have the above identified drawbacks of the prior art.

### SUMMARY OF THE INVENTION

According to an aspect of the invention a method is proposed of proximity discovery between a first mobile communication device and a second mobile communication device for enabling the first communication device and the second communication device to set up a device-to-device communication session. The first mobile communication device is communicatively connected to a first communication network for receiving a first communication service via the first communication network in a first geographic area and in a first frequency-band. The second mobile communication device is communicatively connected to a second communication network, different from the first communication network, for receiving a second communication service via the second communication network in a second geographic area and in a second frequency-band. The first mobile communication device is configured for transmitting first information in a third frequency-band, disjoint from the first frequency-band and disjoint from the second frequency-band. The first information is representative of a first identifier of the first mobile communication device and of a first geographic location of the first mobile communication device. The second communication network is configured for monitoring the third frequency-band. The method comprises receiving the first information from the first mobile communication device. The method further comprises consulting, under control of the first identifier, a database for determining if the first mobile communication device is listed as associated with the second mobile communication device. The method further comprises, if the first mobile communication device is listed as associated with the second mobile communication device, determining a second geographic location of the second mobile communication device. The method further comprises determining a spatial proximity between the first mobile communication device and the second mobile communication device based on the first geographic location and the second geographic location.

The mobile communication devices may be registered with the communication networks.

As is clear, what has been specified in the method above is symmetrical with regard to the adjectives ""first" and "second". Accordingly, a specific mobile communication device registered with a specific communication network transmits its identity and geographic location in the third frequency-band. The third frequency-band is used for the transmission and reception of information so as to be able to determine spatial proximity between mobile communication devices that are registered with different communication networks. Although possible, the third frequency-band preferably does not overlap with the respective operator frequency-bands wherein the respective operators of the different communication networks provide their respective conventional communication services. The third frequency-band may be monitored by the first communication network, the second communication network or by another communication network and the transmission from the specific mobile communication device, communicatively connected to (and possibly registered with) a specific communication network, is received by this communication network. The identifier of the specific mobile communication device is then used to check if the user of the specific mobile communication device is listed in a database, or any other form of data storage, as associated - for example in a declared buddy relationship in case of a social media context or any other association in any other context - with one or more other mobile communication devices communicatively connected to (and possibly registered with) this other communication network. If the specific mobile communication device or user of the mobile communication device is listed as associated with another mobile communication device communicatively connected to the other communication network, the geographic location of the other mobile communication device is determined. The spatial proximity is then determined from the geographic location of the specific mobile communication device and from the geographic location of the other mobile communication device.

The spatial proximity information is used to determine if the mobile communication devices are potentially in radio proximity for setting up a device-to-device communication session. Although a proximity between the mobile devices may thus be discovered, this does not necessarily mean that the two mobile communication devices are actually close enough for a D2D communication session. If the mobile communication devices are notified of their spatial proximity, they may e.g. have to perform an additional procedure to establish that they are close enough for a D2D communication session.

The database may be operated by, e.g., the operator of the first communication network, or the operator of the second communication network, or by another party. Alternatively, the database is located in the mobile communication devices.

The first geographic location may be determined by the first communication network and is then received by the first mobile communication device from the first communication network. Alternatively, the first geographic location may be determined by the first mobile communication device (e.g., as generated by an onboard navigation device such as a GPS device, or as manually entered into the first mobile communication device by the first user via the user-interface of the first mobile communication device). Likewise, the second geographic location may be determined by the second communication network, or may be determined by the second mobile communication device (e.g., as generated by an onboard navigation device such as a GPS device, or as manually entered into the second mobile communication device by the first user via the user-interface of the second mobile communication device).

The relevant one of the first mobile communication device and the second mobile communication device may transmit the information representative of its identifier and of its geographic location in the third frequency-band periodically in order to advertize the presence of the relevant mobile communication device. Alternatively, the relevant mobile communication device transmits the information only after a substantive change in its geographic location.

In an embodiment of the method of the invention the determining of the second geographic location comprises one of: receiving via the second communication network second information, transmitted by the second mobile communication device in the third frequency-band, and representative of a second identifier of the second mobile communication device and of the second geographic location; receiving via the second communication network second information, transmitted by the second mobile communication device in the second frequency-band, and representative of a second identifier of the second mobile communication device and of the second geographic location; receiving via the first communication network second information, transmitted by the second mobile communication device in the third frequency-band, and representative of a second identifier of the second mobile communication device and of the second geographic location, wherein the first communication network is configured for monitoring the third frequency-band; or receiving from the second communication network second information generated by the second communication network and indicative of the second geographic location.

This embodiment offers multiple options for determining the second geographic location of the second mobile communication device.

In a first option, information about the second geographic location is received via the second communication network that is monitoring the third frequency-band, on which the second mobile communication device is transmitting.

In a second option, the second communication network itself determines the second geographic location. For example, if the second mobile device comprises a mobile phone and the second communication network comprises a cellular mobile phone network, the second communication network may determine the second geographic location on the basis of the particular one of the cells of the mobile phone network. In IDLE mode, the second mobile communication device is just camping on the particular cell of the cellular network and there is no communication session ongoing between the second mobile communication device and the cellular network .The cellular network then knows the geographic location of the second mobile communication device on a so-called location area level (e.g., a cluster of cells, typically few tens or hundreds cells, grouped in a single geographical area). In ACTIVE mode, the second mobile communication device is involved in an ongoing communication session (e.g., voice communication, video streaming, browsing the Internet, etc.). Then, the cellular network has information about the second geographic location of the second mobile communication device at the cell level. A cell refers to the coverage area of a particular geographical sector served by a particular base station, and a typical base station covers three or more such geographical sectors.

In a third option, the second mobile communication device transmits information about the second geographic location in the second frequency-band, different from the third frequency-band and used by the second communication network to provide the second communication service. The information may be generated by, e.g., a GPS receiver onboard the second mobile communication device, or may have been entered manually by the user into the second mobile communication device via a user-interface of the second mobile communication device.

In a further embodiment the determining of the second geographic location comprises at least one of using a navigation device local to the second mobile communication device, receiving at the second mobile communication device second data from the second communication network for determining the second geographic location, receiving user-input, indicative of the second geographic location, from a user of the second mobile communication device via a user-interface of the second mobile communication device, receiving information about the second geographic location in a wireless manner from a specific one of one or more beacons installed in a region of presence of the second mobile communication device.

For example, the second mobile communication device accommodates, or is connected to, a navigation device, such as a GPS receiver, local to the second mobile communication device. Upon receipt of the information indicative of the first geographic location, the second mobile communication device may automatically start a procedure for querying the navigation device about the current second geographic location. Alternatively, the second mobile communication device receives at the second mobile communication device second data from the second communication network for determining the second geographic location. For example, upon receipt of the information about the first geographic location, the second mobile communication device automatically starts a procedure for requesting the second communication network to return to the second mobile communication device information about the current second geographic location. Alternatively, the second mobile communication device receives user-input, indicative of the second geographic location, from the second user and via a user-interface of the second mobile communication. For example, upon receiving, for the first time since turning on the second mobile communication device, information about a geographic location of a user listed in the local database, the second mobile communication device triggers the user to enter information about the current second communication device. The second mobile communication device may then determine the spatial proximity. The information about the current second geographic location as entered is then stored at the second mobile communication device and is considered to remain valid for some length of time. The length of time is under control of the second user and the second geographic location as stored can be changed by the second user via the user-interface at his/her discretion. Upon receipt of information about the first geographic location, the stored second geographic location is then used in order to determine spatial proximity, until the second user replaces the stored second geographic location by a new second geographic location via the user-interface of the second mobile communication device. Alternatively, the second mobile communication device is configured for receiving information about the current second geographic location of the second mobile communication device in a wireless manner from a specific one of one or more beacons installed in a region of presence of the second mobile communication device. For example, the region of presence comprises the premises of an industrial plant, a university campus, a district of a town, etc. Beacons may be implemented, for example, as (short-range) radio beacons and the second mobile communication device is equipped with a suitable receiver for receiving the radio signal of a nearby beacon that is representative of the current second geographic location of the second mobile communication device.

In a further embodiment the receiving of the first information from the first mobile communication device comprises receiving the first information in the second communication network in the third frequency-band. The database is remote from the first mobile communication device and the second mobile communication device and accessible by the second communication network. The consulting of the database, the determining of the second geographical location and the determining of the spatial proximity are performed in the second communication network.

Accordingly, the second communication network may be configured for determining the geographic proximity. A node in the second communication network receives the information about the first geographic location that is transmitted by the first mobile communication device in the third frequency-band. Hereto the second communication network monitors the transmissions in the third frequency-band. The node in the second communication network accommodates, or has access to, a database. The database lists users of other mobile communication devices with whom the second mobile communication device has an association. Upon receipt of the first information from the first mobile communication device, the node in the second communication network consults the database in order to check if the first mobile communication device, identified by the first identifier in the first information, is listed in the database. If the first mobile communication device is listed in the database, the second mobile communication device determines the second geographic location in order to determine the spatial proximity.

In a further embodiment the receiving of the first information from the first mobile communication device comprises receiving the first information in the second mobile communication device in the second frequency-band. The database is local to the second mobile communication device and accessible by the second mobile communication device. The consulting of the database, the determining of the second geographical location and the determining of the spatial proximity are performed in the second mobile communication device.

Accordingly, the second mobile communication device may be configured for determining the geographic proximity. The second mobile communication device receives the information about the first geographic location via the second communication network. The second communication network monitors the transmissions in the third frequency-band and transmits the monitored transmissions in its own second frequency-band for being received by, e.g., the second mobile communication device. The second mobile communication device accommodates, or has access to, a database local to the second mobile communication device. The database lists other mobile communication devices with whom the second mobile communication device has an association. Upon receipt of the transmission from the first mobile communication device via the second mobile communication network, the second mobile communication device consults the database in order to check if the first mobile communication device, identified by the first identifier, is listed in the database. If the first mobile communication device is listed in the database, the second mobile communication device determines the second geographic location in order to determine the spatial proximity.

In a further embodiment the method further comprises receiving the first information in the second communication network in the third frequency-band and broadcasting the first information by the second communication network in the second frequency-band.

Accordingly the second communication network broadcasts the first information to multiple devices in the second communication network, e.g. to all mobile devices in a mobile cell, to all mobile devices communicatively connected to a base station or all mobile devices communicatively connected to an access point.

In a further embodiment the method further comprising at least one of: notifying the first mobile communication device of the spatial proximity via the first communication network using the first frequency-band; and notifying the second mobile communication device of the spatial proximity via the second communication device using the second frequency-band.

The notifying of the first mobile communication device and/or the notifying of the second mobile communication device may be implemented in a variety of ways. For example, upon determining that, e.g., the second mobile communication device is to be notified, the second communication network transmits a cue to the second mobile communication device to generate an auditory signal and/or a visual signal via the user-interface of the second mobile communication device. Alternatively, if the second mobile communication device has a graphical user-interface (GUI) with a display monitor, the graphical user-interface presents a representation of a geographical region, with a characteristic dimension of, say ,5 km and centered on the current second geographic location of the second mobile communication device. Under control of the data received from the second communication network, the GUI indicates the current first geographic location of the first mobile communication device if the current first geographic location lies within the geographical region, and possibly one or more current further geographic locations of the mobile communication devices that the second mobile communication device is authorized and willing to track. The user-interface may be controlled to add an auditory alert for each respective one of the first user and the further users when the magnitude of the spatial proximity of the second user to the respective user has decreased below a pre-set threshold.

In a further embodiment the notifying if performed under control of a predetermined condition. The predetermined condition depends on at least one of the following: the first geographic location; the second geographic location; a first authorization from the first mobile communication device to notify the second mobile communication device; a second authorization from the first mobile communication device to notify the first mobile communication device; a third authorization from the second mobile communication device to notify the first mobile communication device; a fourth authorization from the second mobile communication device to notify the second mobile communication device; a time of the day; a day of the week; a first identity of the first mobile communication device; and a second identity of the second mobile communication device.

The notifying may be made dependent on a variety of pre-determined conditions. The pre-determined conditions as specified above may represent a profile of the first mobile communication device and/or a profile of the second mobile communication device. For example, a second user of the second mobile communication device may have specified in advance that he/she only wants to be notified of the spatial proximity of this specific first user of the first mobile communication device at certain time slots of certain days of the week and if the second user is present within a certain geographic area centered on the second geographic location at the certain time slots of the certain days. Accordingly, a user (here: the second user) may specify an individual set of conditions per individual one of a plurality of other users (here: including the first user), under which the user wishes to be notified of the spatial proximity of the individual other user.

Each specific one of the first communication network and the second communication network may comprise any of: a cellular network (or: a mobile phone network), a wireless local area network (WLAN), e.g., a WLAN based on the IEEE 802.11 family of standards), a local wireless communication network based on, e.g., Bluetooth as based on the IEEE 802.15.1 family of standards, etc. Each specific one of the first communication network and the second communication network may even comprise a fixed network, such as Ethernet, that is being used by nomadic, i.e., mobile, users. A nomadic user connects his/her (mobile) communication device, e.g., his/her laptop) to a particular Ethernet hub/socket that is associated to a specific geographic location (e.g., the user's work-place). Accordingly, a first geographic location can be associated with a first communication device connected to a specific hub or socket of the Ethernet-based communication network. The invention thus enables to determine the specific geographic location and to make information available to a second communication device about this specific geographic location of this specific communication device. Note that the other communication device may, but need not be, connected to the same or to another Ethernet-based communication network. As long as the information about the first geographic location is made available by the first-mentioned Ethernet-based communication network, and as long as the second geographic location of the second (mobile) communication device can be determined (e.g., via a GPS receiver at the second communication device itself, via the second communication network, via the second user of the second communication device entering information about his/her geographic location via the user-interface of the second communication device, etc.), the spatial proximity can be determined.

Accordingly, the geographic locations of different mobile communication devices that are registered with different communication networks, whether or not using different network technologies, communication protocols or localization techniques, may be tracked to determine spatial proximity. For example, the respective geographic locations of a laptop connected to a particular socket of the Ethernet and a mobile phone wirelessly connected to a mobile telephony network may get tracked. Information about the geographic locations may be made available to, e.g., the intermediate entity managing the database, or to the mobile phone, or to the laptop each with their own local database, via one or more network bridges or gateways.

According to an aspect of the invention a second mobile communication device is proposed that is configured for proximity discovery between a first mobile communication device and the second mobile communication device for enabling the first communication device and the second communication device to set up a device-to-device communication session. The first mobile communication device is communicatively connected to a first communication network for receiving a first communication service via the first communication network in a first geographic area and in a first frequency-band. The second mobile communication device is communicatively connected to a second communication network, different from the first communication network, for receiving a second communication service via the second communication network in a second geographic area and in a second frequency-band. The second communication network is configured to monitor a third frequency-band, disjoint from the first frequency-band and disjoint from the second frequency-band. The first mobile communication device is configure to transmit first information in the third frequency-band. The first information is representative of a first identifier of the first mobile communication device and of a first geographic location of the first mobile communication device. The second mobile communication device is further configured for receiving the first information from the second communication network and in the second frequency-band. The second mobile communication device is further configured for, under control of the first identifier, consulting a database for determining if the first mobile communication device is listed as associated with the second mobile communication device. The second mobile communication device is further configured for, if the first mobile communication device is listed as associated with the second mobile communication device, determining a second geographic location of the second mobile communication device. The second mobile communication device is further configured for determining a spatial proximity between the first mobile communication device and the second mobile communication device based on the first geographic location and the second geographic location.

In an embodiment of the second mobile communication device the determining of the second geographic location comprises at least one of: using a navigation device local to the second mobile communication device; receiving at the second mobile communication device second data from the second communication network for determining the second geographic location; receiving user-input, indicative of the second geographic location, from a user of the second mobile communication device via a user-interface of the second mobile communication; and receiving information about the second geographic location in a wireless manner from a specific one of one or more beacons installed in a region of presence of the second mobile communication device.

In an embodiment the second mobile communication device is further configured for notifying the second mobile communication device of the spatial proximity under control of a pre-determined condition. The predetermined condition depends on at least one of the following: the first geographic location; the second geographic location; an authorization from the second mobile communication device to notify the second mobile communication device; a time of the day; a day of the week; a first identity of the first mobile communication device; and a second identity of the second mobile communication device.

In an embodiment the second mobile communication device is further configured for transmitting in the third frequency-band second information that is representative of a second identifier of the second mobile communication device and of the second geographic location.

The observations made to the aspect of the invention with respect to the method of the invention apply mutatis mutandis to the aspect of the invention with respect to the second mobile communication device.

According to an aspect of the invention control software is proposed, which, when being executed by a processor in a second mobile communication device, is operative to configure the second mobile communication device for proximity discovery between a first mobile communication device and the second mobile communication device for enabling the first communication device and the second communication device to set up a device-to-device communication session. The first mobile communication device is communicatively connected to a first communication network for receiving a first communication service via the first communication network in a first geographic area and in a first frequency-band. The second mobile communication device is communicatively connected to a second communication network, different from the first communication network, for receiving a second communication service via the second communication network in a second geographic area and in a second frequency-band. The second communication network is configured to monitor a third frequency-band, disjoint from the first frequency-band and disjoint from the second frequency-band. The first mobile communication device is configure to transmit first information in the third frequency-band, wherein the first information is representative of a first identifier of the first mobile communication device and of a first geographic location of the first mobile communication device. The control software comprises first instructions for receiving the first information from the second communication network. The control software further comprises second instructions for consulting, under control of the first identifier, a database for determining if the first mobile communication device is listed as associated with the second mobile communication device. The control software further comprises third instructions for determining a second geographic location of the second mobile communication device if the first mobile communication device is listed as associated with the second mobile communication device. The control software further comprises fourth instructions for determining a spatial proximity between the first mobile communication device and the second mobile communication device based on the first geographic location and the second geographic location.

In an embodiment the first instructions comprise fifth instructions for receiving the first information at the second mobile communication device in the second frequency-band and the second instructions are configured for consulting the database that is local to the second mobile communication device.

In an embodiment the third instructions comprise at least one of: sixth instructions for using a navigation device local to the second mobile communication device; seventh instructions for receiving at the second mobile communication device second data from the second communication network for determining the second geographic location; eighth instructions for receiving user-input, indicative of the second geographic location, from the second user and via a user-interface of the second mobile communication; and ninth instructions for receiving information about the second geographic location in a wireless manner from a specific one of one or more beacons installed in a region of presence of the second mobile communication device.

In an embodiment the control software further comprises tenth instructions for notifying the second communication device of the spatial proximity under control of a pre-determined condition. The predetermined condition depends on at least one of the following: the first geographic location; the second geographic location; a fourth authorization from the second mobile communication device to notify the second mobile communication device; a time of the day; a day of the week; a first identity of the first mobile communication device; and a second identity of the second mobile communication device.

In an embodiment the control software further comprises eleventh instructions for transmitting in the third frequency-band second information that is representative of a second identifier of the second mobile communication device and of the second geographic location.

The observations made to the aspect of the invention with respect to the method of the invention apply mutatis mutandis to the aspect of the invention with respect to the control software.

### BRIEF DESCRIPTION OF THE DRAWING

The invention is explained in further detail, by way of example and with reference to the accompanying drawing, wherein:
Fig.1 is a block diagram of a first embodiment of a system in the invention; and
Fig.2 is a block diagram of a second embodiment of a system in the invention.

Throughout the Figures, similar or corresponding features are indicated by same reference numerals.

### DETAILED EMBODIMENTS

### FIRST EXEMPLARY EMBODIMENT - Centralized Database

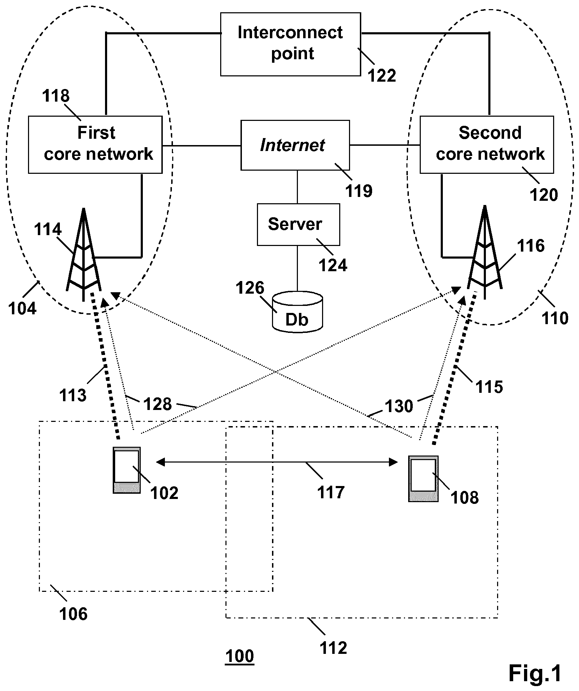

Fig.1 is a diagram of a first exemplary embodiment 100 of a mobile communication system. In the first embodiment 100, a first mobile communication device 102 (e.g., a first mobile phone) may be communicatively connected to (and possibly registered with) a first communication network 104 providing a mobile communication service in a first geographic area 106 in a first frequency-band. In the first embodiment 100, a second mobile communication device 108 (e.g., a second mobile phone) may be communicatively connected to (and possibly registered with) a second communication network 110 providing a mobile communication service in a second geographic area 112, possibly overlapping with the first geographic area 106, in a second frequency-band, typically non-overlapping with (i.e., disjoint from) the first frequency-band. The first communication network 104 may have one or more base transceiver stations (BTSs), of which a particular one is illustrated in the diagram of Fig.1 with reference numeral 114. The BTSs of the first communication network 104 may be connected to a first core network 118 of the first communication network 104.

The second communication network 110 may have one or more other BTSs, of which a particular other one is illustrated in the diagram of Fig.1 with reference numeral 116. The BTSs of the second communication network 110 are connected to a second core network 120 of the second communication network 110. The first core network 118 and the second core network 120 may be connected via an exchange (also referred to as "interconnect point") 122 for, e.g., routing calls or data from the first communication network 104 to the second communication network 110 and vice versa.

If the first mobile communication device 102 is switched on, the first communication network 104 may have a first radio connection 113 with the first mobile communication device 102 via the first frequency-band. The first radio connection 113 enables the first communication network 104 to determine which one of the BTSs of the first communication network 104 is to serve the first mobile communication device 102. In the example shown, the BTS 114 is serving the first mobile communication device 102. Likewise, if the second mobile communication device 108 is switched, the second communication network 110 may have a second radio connection 115 with the second mobile communication device 108 via the second frequency-band (typically disjoint from the first frequency band). The radio connection 115 enables the second communication network 110 to determine which one of the BTSs of the second communication network 110 is to serve the second mobile communication device 108. Here, the other BTS 116 is serving the second mobile communication device 108.

In a social networking context a first user of the first mobile communication device 102 and a second user of the second mobile communication device 108 may be buddies. That is, each respective one of the first user and the second user may have registered with a buddy service as being buddies of one another. More generally, the first and second mobile communication devices may be registered as associated.

For completeness, and in order to clarify the embodiments discussed with reference to the drawings, the first communication device and the second communication device are associated if the first mobile communication device (e.g. via the first user) and second mobile communication device (e.g. via the second user) have given, in advance, authorization to each other to be discoverable via their respective mobile communication devices. The authorization may be allowed or confirmed by the respective one of the operator of the first communication network and the operator of the second communication network. Note that there are many options known in the art for implementing this authorization. See, e.g., 3GPP specification Technical Report TR 22.803 v0.3.0 "Feasibility Study on Proximity-based Services", Section 5.1.1.5 about requirements imposed on a mobile communication device so as to be discoverable or not.

The association enables the first communication device 102 and the second communication device 108 to get informed, when the first mobile communication device 102 and the second mobile communication device 108 are geographically within range of one another, for example, so as to be able to initiate a D2D communication session between the first mobile communication device 102 and the second mobile communication device 108, or to have the option to meet face-to-face, etc. To this end, the first embodiment 100 of the mobile communication system may include a server 124 and a database 126 for implementing the storage and processing of the association. The server 124 may be connected, e.g., via the Internet 119, to the first core network 118 and to the second core network 120.

For each particular one of the mobile devices registered, the database 126 stores a particular identifier of the particular mobile communication device and one or more other identifiers of other mobile communication devices that have registered. The identifier may be a hardware identifier identifying the communication device (e.g. an IMSI or MAC address), an identifier of a user subscription on the mobile communication device (e.g. an MSISDN number, email-address, ip-address or user-defined user identity), or any other identity suitable for registering the mobile device.

The server 124 and the database 126 may be managed, for example, by the first operator of the first communication network 104, or by the second operator of the second communication network 110, or by an independent party. Regardless of which party manages the server 124 and the database 126, both the first operator of the first communication network 104 and the second operator of the second communication network 110 may be enabled to modify relevant information in the database 126 and/or to retrieve relevant information from the database 126. For completeness, it is remarked here that the first operator and the second operator may, but need not, be one and the same operator. What is relevant here is that the first communication network 104 and the second communication network 110 are different communication networks, e.g., in the sense of using different frequency spectra and/or different mobility state definitions and/or other attributes of the mobile communication devices being served that may not readily be available to, known by, or shared between the different communication networks.

As mentioned earlier, the first communication network 104 may be a first mobile phone network and the second communication network 110 may be a second mobile phone network, different from the first mobile phone network. Alternatively, the first communication network 104 may be a first WLAN, and the second communication network 110 may be a second WLAN. Alternatively, the first communication network 104 may be a first communication network based on, e.g., Bluetooth, and the second communication network 110 may be a second communication network based on Bluetooth, different from the first communication network 104. Alternatively, the first communication network 104 may be a first communication network based on Ethernet and the second communication network 110 may be a second communication network based on Ethernet, different from the first communication network 104. Alternatively, one of the first communication network 104 and the second communication network 110 may be a mobile phone network, and the other one of the first communication network 104 and the second communication network 110 may be any of: a WLAN, a communication network based on Bluetooth, a communication network based on Ethernet. If disparate communication networks are involved, information about geographic locations may be communicated via suitable network bridges or gateways.

The first communication network 104 and the second communication network 110 share a pre-determined, possibly dedicated, frequency-band (also called a joint frequency-band or a joint spectrum) for providing one or more inter-network services, i.e., services the providing of which involves both the first communication network 104 and the second communication network 110. This joint spectrum may be used for the signaling involved in the discovery and selection of mobile communication devices registered with different communication networks. Each of the communication networks using this joint spectrum typically has the capability to monitor the signaling that is going on in the joint spectrum. It is also possible, for some deployments merging commercial networks with public safety networks, that the joint spectrum is a specific spectrum band allocated for public safety usage (e.g. firefighters, police, etc.) where the public safety users can exchange signaling related to proximity discovery.

Each respective one of the mobile communication devices, e.g., the first mobile communication device 102 and the second mobile communication device 108, may use the joint spectrum for transmitting one or more respective identifiers (for identifying the respective transmitting mobile communication device) and respective location-specific information related to the geographic location of the respective transmitting mobile communication device. In the diagram of Fig.1, a first transmission from the first mobile communication device 102 in the joint spectrum is indicated with a reference numeral 128, and a second transmission from the second mobile communication device 108 in the joint spectrum is indicated by a reference numeral 130.

The one or more identifiers transmitted by a particular mobile communication device comprises, e.g., data from the Subscriber Identification Module (SIM) of the particular mobile communication device, etc. The location-specific information transmitted by a particular one of the mobile communication devices comprises, for example, a message giving the current geographic location of the particular mobile communication device as derived from an onboard GPS-receiver or via other localization technologies. As another example of location-specific information, the particular mobile communication device transmits an identifier of the public land mobile network (PLMN ID) that is the home cellular network of the particular mobile communication device and, in addition, an identifier of the cell of the home cellular network wherein the particular mobile communication device is currently camping, location area code (LAC), routing area code (RAC), tracking area code (TAC), etc., that is readily available from the relevant one of the first communication network 104 and the second communication network 110 with which the particular mobile communication device is registered.

Now consider a scenario, wherein the BTS 116 of the second communication network 110 receives, in the joint spectrum, the location-specific information in the first transmission 128 from the first mobile communication device 102 that is registered with the first communication network 104. The second communication network 110 processes the information received in the first transmission 128, for example as follows. The second communication network 110 determines whether or not there is an association of the first mobile communication device 102 present in the geographic domain served by the second communication network 110. In order to be able to do this, the second communication network 110 may query the database 126, based on the identifier of the first mobile communication device 102. The second communication network 110 may then initiate a procedure for checking if the database 126 lists, as associated to the first mobile communication device 102, another mobile communication device that has e.g. subscribed to the mobile communication service provided by the second communication network 110. For example, the second communication network 110 accesses the database 126 and runs the query by checking whether there is an identifier present among the associations, listed for the first user, which belongs to a subscriber to the services provided by the second communication network 110. Alternatively, the second communication network 110 submits to the server 124 the identifier of the first mobile communication device 102 and an indication for identifying the second communication network 110. The database 126 has been configured to store per particular buddy of each specific user, registered with the buddy service, a particular indication of the identity of the particular communication network, to whose mobile communication service the particular buddy has subscribed. In response to receiving, from the second communication network 110, the identifier of the first mobile communication device 102 and an indication identifying the second communication network 110, the server 124 either returns a message that there are no associations that are subscribers to the services provided by the second communication network 110, or one or more identifiers which belong to subscribers to the services provided by the second communication network 110.

The second mobile communication device 108 may be registered to a subscriber to whom mobile communication services are provided by the second communication network 110. Assume that the second user of the second mobile communication device 108 is registered in the database 126 as a buddy of the first user of the first mobile communication device 102 and that the second communication network 110 has determined, or received, this information that the second user is a registered buddy of the first user. The second communication network 110 then proceeds with processing the location-specific information received in the first transmission 128 from the first mobile communication device 102, and also determines the geographic location of the second mobile communication device 108 so as be able to determine the spatial proximity between the first mobile communication device 102 and the second mobile communication device 108. The geographic location of the second mobile communication device 108 may then also be determined from the location-specific information in the second transmission 130.

Accordingly, the second communication network 110 is capable of determining the spatial proximity between the first mobile communication device 102 and the second mobile communication device 108. If the second communication network 110 has determined that the spatial proximity between the first mobile communication device 102 and the second mobile communication device 108 complies with one or more pre-determined criterions, e.g., that the devices are within D2D-range of each other, the second communication network 110 may notify the second user of the vicinity of the first user via the second mobile communication device 108, e.g., via the second frequency-band. As specified above, other criterions may be involved in determining whether or not to notify the second user of the vicinity of the first user depending on the profile of the second user, e.g., as stored in the database 126 or as included in the second transmission 130. Examples of such other criterions include: the geographic location of the first mobile communication device 102 as declared in the first transmission 128; the geographic location of the second mobile communication device 108 as declared in the second transmission 130; a first authorization from the first mobile communication device or first user to notify the second mobile communication device or second user; a second authorization from the first mobile communication device or first user to notify the first mobile communication device or first user; a third authorization from the second mobile communication device or second user to notify the first mobile communication device or first user; a fourth authorization from the second mobile communication device or second user to notify the second mobile communication device or second user; a time of the day; a day of the week; a first identity of the first mobile communication device; and a second identity of the second mobile communication device.

A similar procedure can be followed, mutatis mutandis, by the first communication network 104: if the first communication network 104 has determined that the spatial proximity between first mobile communication device 102 and the second mobile communication device 108 complies with one or more pre-determined criterions, the first communication network 104 may notify the first mobile communication device or the first user of the vicinity of the second mobile communication device or the second user via the first mobile communication device 102 by sending an alert to the first mobile communication device 102, e.g., in the first frequency-band.

After informing at least one of the first mobile communication device 102 and the second mobile communication device 108 that a D2D communication session appears feasible, and if the first mobile communication device 102 and the second mobile communication device 108 start the process for establishing a D2D communication link, the first communication network 104 and the second communication network 110 may exchange signaling information to establish this D2D communication link as described in, e.g., US patent application publication 2011/0258327 discussed above, International application publication WO 2011/147462, mentioned above, or the publication "Design Aspects of Network Assisted Device-to-Device Communications", Gabor Fodor et al., IEEE Communications Magazine, March 2012, pp. 170-117, mentioned above.

Optionally, the following procedure may be followed if the location-specific information, transmitted by a particular mobile communication device in the joint spectrum, is incomplete or unreliable. Assume that there are two or more BTSs of the second communication network 110 that are capable of determining the location-specific information in the signal as received in the transmission 128 from the first mobile communication device 102 via the joint spectrum. Assume that the BTS 116 has received the signal with the highest strength. Then only the BTS 116 is used to notify the second mobile communication device 108 of the vicinity of the first mobile communication device 102 by transmitting, for example, a paging signal. As known, paging is also used to set up a one-to-one communication channel between a mobile communication device and a base station. If this paging signal is strong enough for being received and processed by the second mobile communication device 108, the second mobile communication device 108 may reply by sending a reply to the BTS 116. If the second mobile communication device 108 does reply, then this implies that the first mobile communication device 102 and the second mobile communication device 108 might be within D2D range of each other, i.e. within a geographic area wherein the coverage area of the BTS 114 in the first cellular network 104 and the coverage area of the BTS 116 in the second cellular network 110 are overlapping.

### SECOND EXEMPLARY EMBODIMENT - Distributed Databases

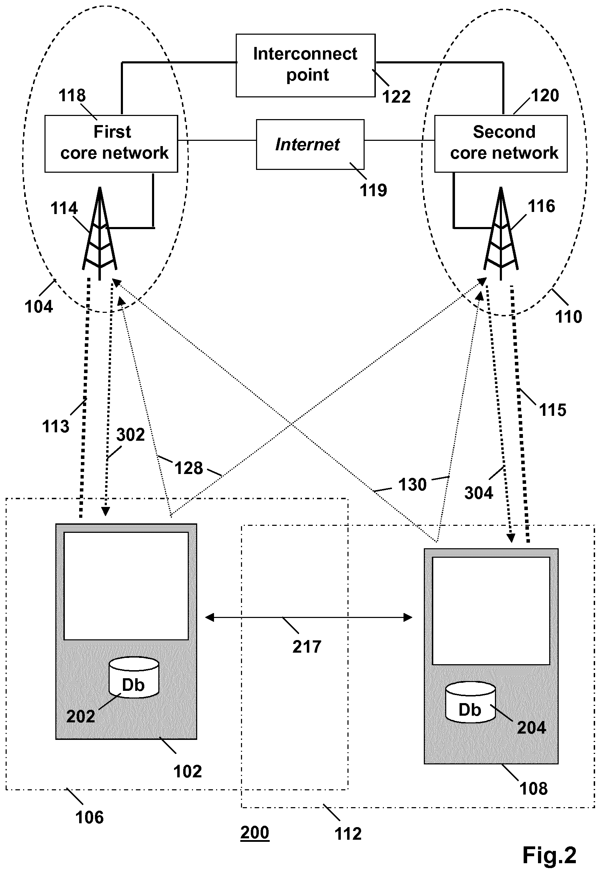

Fig.2 is a diagram of a second embodiment 200 of a mobile communication system in the invention. The second embodiment 200 has features in common with the first embodiment 100 of Fig.1, discussed above. The commonalities of the first embodiment 100 and of the second embodiment 200 will not all be discussed separately with reference to Fig.2, as these have already been discussed above.

As in the first embodiment 100, operation of the second embodiment 200 is based on the first communication network 104 and the second communication network 110 using the joint spectrum for specific inter-network services, here for discovery of mobile communication devices. It is possible, for some deployments merging commercial networks with public safety networks, that the joint spectrum is a specific spectrum band allocated for public safety usage (e.g. firefighters, police, etc.) where the public safety users can exchange signaling related to proximity discovery. The first mobile communication device 102 in the second embodiment 200 uses the joint spectrum for transmitting one or more first identifiers for identifying the first mobile communication device 102 and first location-specific information related to the first mobile communication device 102. The transmission by the first mobile communication device 102 in the joint spectrum will be referred to as the first transmission and is indicated in the diagram of Fig.2 with the reference numeral 128. The second mobile communication device 108 in the second embodiment 200 uses the joint spectrum for transmitting one or more second identifiers for identifying the second mobile communication device 108 and second location-specific information related to the second mobile communication device 108. The transmission by the second mobile communication device 108 in the joint spectrum will be referred to as the second transmission and is indicated in the diagram of Fig.2 with the reference numeral 130.

The first operator of the first communication network 104 and the second operator of the second communication network 110 may have the capability to have their BTSs monitor the signaling that is going on in the joint spectrum.

One or more BTSs of the first communication network 104, e.g., the BTS 114, receive the second transmission 130 from the second mobile communication device 108 in the joint spectrum and re-transmit this second transmission 130, e.g. as a second broadcast 302, now within the first frequency-band that is used by the first operator for providing communication services to his subscribers. In order for a BTS of the first communication network 104 to be capable of receiving the second transmission 130 from the second mobile communication device 108, the relevant BTS (here: the BTS 114) and the second mobile communication device 108 are typically within a certain distance from one another.

Likewise, one or more BTSs of the second communication network 110, e.g., the BTS 116, receive the first transmission 128 from the first mobile communication device 102 in the joint spectrum and re-transmit the first transmission 128, e.g. as a first broadcast 304, within the second frequency-band that is used by the second operator for providing communication services to his subscribers. In order for a BTS of the second communication network 110 to be capable of receiving the first transmission 128 from the first mobile communication device 102, the relevant BTS (here: the BTS 116) and the first mobile communication device 102 are typically within a certain distance from one another.

Now consider the example wherein a group of one or more buddies of the second user, who are subscribers to the mobile communication services of the first communication network 104. Assume the first user of mobile communication device 102 is a buddy of the second user of the second mobile communication device 108. If the first mobile communication device 102 is within range of the BTS 114, the first mobile communication device 102 receives the second broadcast 302 from the BTS 114 at sufficiently high signal strength so as to be capable of processing the second broadcast 302. As the second broadcast 302 is a re-transmission of the second transmission 130, the second broadcast 302 includes one or more identifiers of the second mobile communication device 108 and the location-specific information related to the geographic location of the second mobile communication device 108. The first mobile communication device 102 is configured to check the one or more identifiers of the second mobile communication device 108 against identifiers stored in a first database 202. The first database 202 is local to the first mobile communication device 102 and that stores identifiers of the mobile communication devices of the one or more buddies of the first user. This check confirms that the second user of the second mobile communication device 108 is listed in the database 202 as a buddy of the first user of the first communication device 102.

The first broadcast 302 of the second transmission 304 may comprise the location-specific information related to the geographic location of the second communication device 108. The first mobile communication device 102 is configured to process the location-specific information related to the geographic location of the second mobile communication device 108. As the first mobile communication device 102 also has available information about its own geographic location, the first mobile communication device 102 can determine the spatial proximity between the first mobile communication device 102 and the second mobile communication device 108. For example, the first mobile communication device 102 is configured to determine whether the second mobile communication device 108 is within the D2D range for establishing a D2D connection 217 with the first mobile communication device 102.

Consider the BTSs of the first communication network 104 that are able to receive/decode the information received from the second mobile communication device 108 in the second transmission 130 on the joint spectrum. Some of the BTSs of the first communication network 104 do not receive the second transmission 130 at all, other BTSs of the first communication network 104 do receive the second transmission 130, albeit with a too low signal strength, and yet other BTSs of the first communication network 104 receive the second transmission 130 with adequate signal strength so as to be able to decode the information. Preferably, only those particular one(s) among the BTSs of the first communication network 104, which receive the second transmission with the higher signal strength (e.g., only a single one of the BTSs that receives the second transmission 130 with the highest signal strength, or the two or three of the BTSs receiving the second transmission 130 with the two or three highest levels of signal strength among the receiving BTSs) supply the second transmission 130 as the second broadcast 302 in the first frequency-band. The signal strength of the second transmission 130 as received by any particular one of the BTSs of the first communication network 104 depends in general on a geographic distance between the second mobile communication device 108 and the particular BTS: the higher the signal strength, the closer the second mobile communication device 108 generally is to the particular BST. Those ones among the BTSs of the first communication network 104, which receive the second transmission 130 with higher signal strength, broadcast the second transmission 130, are therefore generally closer to the second mobile communication device 108 than others among the BTSs of the first communication network 104, which receive the second transmission 130 with lower signal strength. The particular ones among the BTSs of the first communication network 104, which receive the second transmission 130 with higher signal strength, may be referred to as: the nearby BTSs of the first communication network 104. Consider now the set of active mobile communication devices that have e.g. registered with the communication services of the first communication network 104, and that have a radio connection with the BTSs of the first communication network 104. For example, the first mobile communication device 104 is registered with the operator of the first communication network 104 and has the radio connection 113 with the BST 114. In general, those particular ones in the set of active mobile communication devices, which have radio connections with the nearby BTSs of the first communication network 104, are geographically also closer to the second mobile communication device 108 than other active mobile communication devices in the set. Therefore, from the point-of-view of power consumption by the first communication network 104 and from the point-of-view of the data traffic in the first frequency-band, it is more efficient to have the transmissions, received at the BTSs of the first communication network 104 in the joint spectrum broadcast in the first frequency-band by the nearby BTSs that have received the transmissions with the higher signal strength.

Similar considerations as the ones above apply, mutatis mutandis, to the second mobile communication device 108 receiving from the BTS 116 the first broadcast 304 in the second frequency-band, that includes information from the first transmission 128 from the first mobile communication device 102 on the joint spectrum.

The process of the two mobile communication devices discovering that they are in each other's vicinity is similar to the process described in the first exemplary embodiment. In the first exemplary embodiment the network calculates the proximity and may inform the mobile communication devices about the spatial proximity, while in the second exemplary embodiment the communication devices calculate the spatial proximity and may signal via the respective communication network the detected proximity, e.g. to initiate a D2D communication. The communication devices may optionally inform, e.g. via audio/visual signaling, the users of the communication devices that the other communication device or buddy is nearby.

In the above example, discussed with reference to Figs.1 and 2, the determining of the proximity may be used to determine whether or not a D2D communication session is possible between the mobile communication devices and may be used to alert one or both users of the mobile communication devices involved to the option to start a D2D communication session. Alternatively, the determining of the proximity may be used for other purposes, for example to alert the devices and/or the users to their being in each other's vicinity so as to present the option of meeting face-to-face, or to track the whereabouts of a mobile communication device.

The examples illustrated in Figs.1 and 2 show two mobile phone networks. As mentioned previously, the invention is not limited to proximity detection of mobile phones in two different mobile phone networks, as each specific one of the first communication network and the second communication network may comprise any of a cellular network (also known as a mobile network), a wireless local area network (WLAN) such as a WLAN according to the IEEE 802.11 family of standards, a local wireless communication network based on, e.g., Bluetooth according to the IEEE 802.15.1 family of standards, and etcetera. Each specific one of the first communication network and the second communication network may comprise a fixed network, such as Ethernet that is e.g. being used by nomadic users. A nomadic user connects his/her communication device (e.g. a laptop) to a particular Ethernet hub/socket that is associated to a specific geographic location such as the user's work-place. Accordingly, a first geographic location can be associated with a first communication device connected to a specific hub or socket of the Ethernet-based communication network. The invention thus enables to determine the specific geographic location and to make information available to a second communication device about this specific geographic location of this specific communication device. Note that the other communication device may, but need not be, connected to the same or to another Ethernet-based communication network. As long as the information about the first geographic location is made available by the first-mentioned Ethernet-based communication network and as long as the second geographic location of the second communication device can be determined (e.g. via a GPS receiver at the second communication device itself, via the second communication network, via the second user of the second communication device entering information about his/her geographic location via the user-interface of the second communication device, and etcetera), the proximity can be determined.

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A method of proximity discovery between a first mobile communication device (102) and a second mobile communication device (108) for enabling the first mobile communication device and the second mobile communication device to set up a device-to-device communication session, wherein:
the first mobile communication device is communicatively connected to a first communication network (104) for receiving a first communication service via the first communication network in a first geographic area (106) and in a first frequency-band;
the second mobile communication device is communicatively connected to a second communication network (110), different from the first communication network, for receiving a second communication service via the second communication network in a second geographic area (112) and in a second frequency-band;
the first mobile communication device is configured for transmitting first information in a third frequency-band, disjoint from the first frequency-band and disjoint from the second frequency-band;
the first information is representative of a first identifier of the first mobile communication device and of a first geographic location of the first mobile communication device;
the second communication network is configured for monitoring the third frequency-band, the method comprising:
receiving in the second communication network the first information from the first mobile communication device;
under control of the first identifier consulting a database from the second communication network or second mobile communication device for determining if the first mobile communication device is listed as associated with the second mobile communication device;
if the first mobile communication device is listed as associated with the second mobile communication device, determining a second geographic location of the second mobile communication device; and
determining a spatial proximity between the first mobile communication device and the second mobile communication device based on the first geographic location and the second geographic location.

2. The method according to claim 1, wherein the determining of the second geographic location comprises one of:
receiving via the second communication network second information, transmitted by the second mobile communication device in the third frequency-band, and representative of a second identifier of the second mobile communication device and of the second geographic location;
receiving via the first communication network second information, transmitted by the second mobile communication device in the third frequency-band, and representative of a second identifier of the second mobile communication device and of the second geographic location, wherein the first communication network is configured for monitoring the third frequency-band;
receiving via the second communication network second information, transmitted by the second mobile communication device in the second frequency-band, and representative of a second identifier of the second mobile communication device and of the second geographic location; or
receiving from the second communication network second information generated by the second communication network and indicative of the second geographic location.

3. The method according to any one of the preceding claims, wherein the determining of the second geographic location comprises at least one of:
using a navigation device local to the second mobile communication device;
receiving at the second mobile communication device second data from the second communication network for determining the second geographic location;
receiving user-input, indicative of the second geographic location, from a user of the second mobile communication device via a user-interface of the second mobile communication device; and
receiving information about the second geographic location in a wireless manner from a specific one of one or more beacons installed in a region of presence of the second mobile communication device.

4. The method according to any one of the claims 1-3, wherein the receiving of the first information from the first mobile communication device comprises receiving the first information in the second communication network in the third frequency-band, wherein the database is remote from the first mobile communication device and the second mobile communication device and accessible by the second communication network, and wherein the consulting of the database, the determining of the second geographical location and the determining of the spatial proximity are performed in the second communication network.

5. The method according to any one of the claims 1-3, wherein the receiving of the first information from the first mobile communication device comprises receiving the first information in the second mobile communication device in the second frequency-band, wherein the database is local to the second mobile communication device and accessible by the second mobile communication device, and wherein the consulting of the database, the determining of the second geographical location and the determining of the spatial proximity are performed in the second mobile communication device.

6. The method according to claim 5, further comprising receiving the first information in the second communication network in the third frequency-band and broadcasting the first information by the second communication network in the second frequency-band.

7. The method according to any one of the preceding claims, the method further comprising at least one of:
notifying the first mobile communication device of the spatial proximity via the first communication network using the first frequency-band; and
notifying the second mobile communication device of the spatial proximity via the second communication device using the second frequency-band.

8. The method according to claim 7, wherein the notifying is performed under control of a predetermined condition, wherein the predetermined condition depends on at least one of the following:
the first geographic location;
the second geographic location;
a first authorization from the first mobile communication device to notify the second mobile communication device;
a second authorization from the first mobile communication device to notify the first mobile communication device;
a third authorization from the second mobile communication device to notify the first mobile communication device;
a fourth authorization from the second mobile communication device to notify the second mobile communication device;
a time of the day;
a day of the week;
a first identity of the first mobile communication device; and
a second identity of the second mobile communication device.

9. A second communication network (110) configured for proximity discovery between a first mobile communication device (102) and a second mobile communication device (108) for enabling the first communication device and the second mobile communication device to set up a device-to-device communication session, wherein:
the first mobile communication device is communicatively connected to a first communication network (104) for receiving a first communication service via the first communication network in a first geographic area (106) and in a first frequency-band;
the second mobile communication device is communicatively connected to the second communication network (110), different from the first communication network, for receiving a second communication service via the second communication network in a second geographic area (112) and in a second frequency-band;
the first mobile communication device is configured for transmitting first information in a third frequency-band, disjoint from the first frequency-band and disjoint from the second frequency-band;
the first information is representative of a first identifier of the first mobile communication device and of a first geographic location of the first mobile communication device;
wherein the second communication network is configured for:
monitoring the third frequency-band;
receiving the first information from the first mobile communication device in the third frequency band;
under control of the first identifier consulting a database for determining if the first mobile communication device is listed as associated with the second mobile communication device;
if the first mobile communication device is listed as associated with the second mobile communication device, determining a second geographic location of the second mobile communication device; and
determining a spatial proximity between the first mobile communication device and the second mobile communication device based on the first geographic location and the second geographic location.

10. A first mobile communication device (102) configured for use in the method of claim 1, wherein:
the first mobile communication device is communicatively connectable to the first communication network (104) for receiving the first communication service via the first communication network in the first geographic area (106) and in the first frequency-band; and
**characterized in that** the first mobile communication device is configured to transmit first information to the second communication network in the third frequency-band disjoint from the first frequency-band and disjoint from the second frequency-band, wherein the first information is representative of a first identifier of the first mobile communication device and of a first geographic location of the first mobile communication device.

## Patentansprüche

1. Verfahren zur Erkennung einer Nähe zwischen einer ersten mobilen Kommunikationsvorrichtung (102) und einer zweiten mobilen Kommunikationsvorrichtung (108) zum Befähigen der ersten mobilen Kommunikationsvorrichtung und der zweiten mobilen Kommunikationsvorrichtung zum Aufbauen einer Verbindungssitzung von Vorrichtung zu Vorrichtung, wobei:
die erste mobile Kommunikationsvorrichtung mit einem ersten Kommunikationsnetzwerk (104) zum Empfangen eines ersten Kommunikationsdienstes über das erste Kommunikationsnetzwerk in einem ersten geografischen Gebiet (106) und in einem ersten Frequenzband kommunikativ verbunden ist;
die zweite mobile Kommunikationsvorrichtung mit einem vom ersten Kommunikationsnetzwerk verschiedenen zweiten Kommunikationsnetzwerk (110) zum Empfangen eines zweiten Kommunikationsdienstes über das zweite Kommunikationsnetzwerk in einem zweiten geografischen Gebiet (112) und in einem zweiten Frequenzband kommunikativ verbunden ist;
die erste mobile Kommunikationsvorrichtung zum Senden erster Informationen in einem dritten Frequenzband getrennt vom ersten Frequenzband und getrennt vom zweiten Frequenzband konfiguriert ist;
die ersten Informationen für eine erste Kennung der ersten mobilen Kommunikationsvorrichtung und einen ersten geografischen Aufenthaltsort der ersten mobilen Kommunikationsvorrichtung repräsentativ sind;
das zweite Kommunikationsnetzwerk zum Überwachen des dritten Frequenzbandes konfiguriert ist, und das Verfahren umfasst:
Empfangen der ersten Informationen von der ersten mobilen Kommunikationsvorrichtung im zweiten Kommunikationsnetzwerk;
Konsultieren einer Datenbank vom zweiten Kommunikationsnetzwerk oder der zweiten mobilen Kommunikationsvorrichtung unter Kontrolle der ersten Kennung zum Bestimmen, ob die erste mobile Kommunikationsvorrichtung als mit der zweiten mobilen Kommunikationsvorrichtung assoziiert aufgeführt ist;
Bestimmen, wenn die erste mobile Kommunikationsvorrichtung als mit der zweiten mobilen Kommunikationsvorrichtung assoziiert aufgeführt ist, eines zweiten geografischen Aufenthaltsorts der zweiten mobilen Kommunikationsvorrichtung; und
Bestimmen einer räumlichen Nähe zwischen der ersten mobilen Kommunikationsvorrichtung und der zweiten mobilen Kommunikationsvorrichtung basierend auf dem ersten geografischen Aufenthaltsort und dem zweitem geografischen Aufenthaltsort.

2. Verfahren nach Anspruch 1, wobei das Bestimmen des zweiten geografischen Aufenthaltsorts eines umfasst von:
Empfangen zweiter Informationen über das zweite Kommunikationsnetzwerk, die durch die zweite mobile Kommunikationsvorrichtung im dritten Frequenzband gesendet werden und für eine zweite Kennung der zweiten mobilen Kommunikationsvorrichtung und den zweiten geografischen Aufenthaltsort repräsentativ sind;
Empfangen zweiter Informationen über das erste Kommunikationsnetzwerk, die durch die zweite mobile Kommunikationsvorrichtung im dritten Frequenzband gesendet werden und für eine zweite Kennung der zweiten mobilen Kommunikationsvorrichtung und den zweiten geografischen Aufenthaltsort repräsentativ sind, wobei das erste Kommunikationsnetzwerk zum Überwachen des dritten Frequenzbandes konfiguriert ist;
Empfangen zweiter Informationen über das zweite Kommunikationsnetzwerk, die durch die zweite mobile Kommunikationsvorrichtung im zweiten Frequenzband gesendet werden und für eine zweite Kennung der zweiten mobilen Kommunikationsvorrichtung und den zweiten geografischen Aufenthaltsort repräsentativ sind; oder
Empfangen zweiter Informationen vom zweiten Kommunikationsnetzwerk, die durch das zweite Kommunikationsnetzwerk erzeugt werden und den zweiten geografischen Aufenthaltsort angeben.

3. Verfahren nach einem der vorhergehenden Ansprüche, wobei das Bestimmen des zweiten geografischen Aufenthaltsorts mindestens eines umfasst von:
Verwenden einer Navigationsvorrichtung vor Ort der zweiten mobilen Kommunikationsvorrichtung;
Empfangen zweiter Daten vom zweiten Kommunikationsnetzwerk an der zweiten mobilen Kommunikationsvorrichtung zum Bestimmen des zweiten geografischen Aufenthaltsorts;
Empfangen einer Benutzereingabe, die den zweiten geografischen Aufenthaltsort angibt, von einem Benutzer der zweiten mobilen Kommunikationsvorrichtung über eine Benutzerschnittstelle der zweiten mobilen Kommunikationsvorrichtung; und
drahtlosem Empfangen von Informationen über den zweiten geografischen Aufenthaltsort von einer spezifischen einer oder mehrerer Baken, die in einer Anwesenheitsregion der zweiten mobilen Kommunikationsvorrichtung installiert sind.

4. Verfahren nach einem der Ansprüche 1 bis 3, wobei das Empfangen der ersten Informationen von der ersten mobilen Kommunikationsvorrichtung ein Empfangen der ersten Informationen im zweiten Kommunikationsnetzwerk im dritten Frequenzband umfasst, wobei die Datenbank von der ersten mobilen Kommunikationsvorrichtung und der zweiten mobilen Kommunikationsvorrichtung entfernt ist und durch das zweite Kommunikationsnetzwerk darauf zugegriffen werden kann, und wobei das Konsultieren der Datenbank, das Bestimmen des zweiten geografischen Aufenthaltsorts und das Bestimmen der räumlichen Nähe im zweiten Kommunikationsnetzwerk durchgeführt werden.

5. Verfahren nach einem der Ansprüche 1 bis 3, wobei das Empfangen der ersten Informationen von der ersten mobilen Kommunikationsvorrichtung ein Empfangen der ersten Informationen in der zweiten mobilen Kommunikationsvorrichtung im zweiten Frequenzband umfasst, wobei die Datenbank vor Ort der zweiten mobilen Kommunikationsvorrichtung ist und durch die zweite mobile Kommunikationsvorrichtung darauf zugegriffen werden kann, und wobei das Konsultieren der Datenbank, das Bestimmen des zweiten geografischen Aufenthaltsorts und das Bestimmen der räumlichen Nähe in der zweiten mobilen Kommunikationsvorrichtung durchgeführt werden.

6. Verfahren nach Anspruch 5, ferner umfassend ein Empfangen der ersten Informationen im zweiten Kommunikationsnetzwerk im dritten Frequenzband und Senden der ersten Informationen per Broadcast durch das zweite Kommunikationsnetzwerk im zweiten Frequenzband.

7. Verfahren nach einem der vorhergehenden Ansprüche, wobei das Verfahren ferner mindestens eines umfasst von:
Benachrichtigen der ersten mobilen Kommunikationsvorrichtung von der räumlichen Nähe über das erste Kommunikationsnetzwerk unter Verwendung des ersten Frequenzbandes; und
Benachrichtigen der zweiten mobilen Kommunikationsvorrichtung von der räumlichen Nähe über das zweite Kommunikationsnetzwerk unter Verwendung des zweiten Frequenzbandes.

8. Verfahren nach Anspruch 7, wobei das Benachrichtigen unter Kontrolle einer vorgegebenen Bedingung durchgeführt wird, wobei die vorgegebene Bedingung abhängt von mindestens einem von Folgenden:
dem ersten geografischen Aufenthaltsort;
dem zweiten geografischen Aufenthaltsort;
einer ersten Autorisierung von der ersten mobilen Kommunikationsvorrichtung zum Benachrichtigen der zweiten mobilen Kommunikationsvorrichtung;
einer zweiten Autorisierung von der ersten mobilen Kommunikationsvorrichtung zum Benachrichtigen der ersten mobilen Kommunikationsvorrichtung;
einer dritten Autorisierung von der zweiten mobilen Kommunikationsvorrichtung zum Benachrichtigen der ersten mobilen Kommunikationsvorrichtung;
einer vierten Autorisierung von der zweiten mobilen Kommunikationsvorrichtung zum Benachrichtigen der zweiten mobilen Kommunikationsvorrichtung;
einer Tageszeit;
einem Wochentag;
einer ersten Kennung der ersten mobilen Kommunikationsvorrichtung; und
einer zweiten Kennung der zweiten mobilen Kommunikationsvorrichtung.

9. Zweites Kommunikationsnetzwerk (110), das zur Erkennung einer Nähe zwischen einer ersten mobilen Kommunikationsvorrichtung (102) und einer zweiten mobilen Kommunikationsvorrichtung (108) zum Befähigen der ersten Kommunikationsvorrichtung und der zweiten mobilen Kommunikationsvorrichtung zum Aufbauen einer Verbindungssitzung von Vorrichtung zu Vorrichtung konfiguriert ist, wobei:
die erste mobile Kommunikationsvorrichtung mit einem ersten Kommunikationsnetzwerk (104) zum Empfangen eines ersten Kommunikationsdienstes über das erste Kommunikationsnetzwerk in einem ersten geografischen Gebiet (106) und in einem ersten Frequenzband kommunikativ verbunden ist;
die zweite mobile Kommunikationsvorrichtung mit dem zweiten Kommunikationsnetzwerk (110), das vom ersten Kommunikationsnetzwerk verschieden ist, zum Empfangen eines zweiten Kommunikationsdienstes über das zweite Kommunikationsnetzwerk in einem zweiten geografischen Gebiet (112) und in einem zweiten Frequenzband kommunikativ verbunden ist;
die erste mobile Kommunikationsvorrichtung zum Senden erster Informationen in einem dritten Frequenzband getrennt vom ersten Frequenzband und getrennt vom zweiten Frequenzband konfiguriert ist;
die ersten Informationen für eine erste Kennung der ersten mobilen Kommunikationsvorrichtung und einen ersten geografischen Aufenthaltsort der ersten mobilen Kommunikationsvorrichtung repräsentativ sind;
wobei das zweite Kommunikationsnetzwerk konfiguriert ist zum:
Überwachen des dritten Frequenzbandes;
Empfangen der ersten Informationen von der ersten mobilen Kommunikationsvorrichtung im dritten Frequenzband;
Konsultieren unter Kontrolle der ersten Kennung einer Datenbank zum Bestimmen, ob die erste mobile Kommunikationsvorrichtung als mit der zweiten mobilen Kommunikationsvorrichtung assoziiert aufgeführt ist;
Bestimmen, wenn die erste mobile Kommunikationsvorrichtung als mit der zweiten mobilen Kommunikationsvorrichtung assoziiert aufgeführt ist, eines zweiten geografischen Aufenthaltsorts der zweiten mobilen Kommunikationsvorrichtung; und
Bestimmen einer räumlichen Nähe zwischen der ersten mobilen Kommunikationsvorrichtung und der zweiten mobilen Kommunikationsvorrichtung basierend auf dem ersten geografischen Aufenthaltsort und dem zweitem geografischen Aufenthaltsort.

10. Erste mobile Kommunikationsvorrichtung (102), die zur Verwendung im Verfahren nach Anspruch 1 konfiguriert ist, wobei:
die erste mobile Kommunikationsvorrichtung mit dem ersten Kommunikationsnetzwerk (104) zum Empfangen des ersten Kommunikationsdienstes über das erste Kommunikationsnetzwerk in einem ersten geografischen Gebiet (106) und im ersten Frequenzband kommunikativ verbunden werden kann; und
**dadurch gekennzeichnet, dass** die erste mobile Kommunikationsvorrichtung zum Senden erster Informationen im dritten Frequenzband getrennt vom ersten Frequenzband und getrennt vom zweiten Frequenzband an das zweite Kommunikationsnetzwerk konfiguriert ist, wobei die ersten Informationen für eine erste Kennung der ersten mobilen Kommunikationsvorrichtung und einen ersten geografischen Aufenthaltsort der ersten mobilen Kommunikationsvorrichtung repräsentativ sind.

## Revendications

1. Procédé de découverte de proximité entre un premier dispositif de communication mobile (102) et un second dispositif de communication mobile (108) pour permettre au premier dispositif de communication mobile et au second dispositif de communication mobile de mettre en place une session de communication de dispositif à dispositif, où :
le premier dispositif de communication mobile est connecté de manière communicative à un premier réseau de communication (104) pour recevoir un premier service de communication par l'intermédiaire du premier réseau de communication dans une première zone géographique (106) et dans une première bande de fréquences ;
le second dispositif de communication mobile est connecté de manière communicative à un second réseau de communication (110), différent du premier réseau de communication, pour recevoir un second service de communication par l'intermédiaire du second réseau de communication dans une seconde zone géographique (112) et dans une deuxième bande de fréquences ;
le premier dispositif de communication mobile est configuré pour transmettre des premières informations dans une troisième bande de fréquences, disjointe de la première bande de fréquences et disjointe de la deuxième bande de fréquences ;
les premières informations sont représentatives d'un premier identifiant du premier dispositif de communication mobile et d'un premier emplacement géographique du premier dispositif de communication mobile ;
le second réseau de communication est configuré pour surveiller la troisième bande de fréquences, le procédé comprenant les étapes suivantes :
recevoir, dans le second réseau de communication, les premières informations du premier dispositif de communication mobile ;
sous le contrôle du premier identifiant, consulter une base de données depuis le second réseau de communication ou le second dispositif de communication mobile pour déterminer si le premier dispositif de communication mobile est répertorié comme étant associé au second dispositif de communication mobile ;
si le premier dispositif de communication mobile est répertorié comme étant associé au second dispositif de communication mobile, déterminer un second emplacement géographique du second dispositif de communication mobile ; et
déterminer la proximité spatiale entre le premier dispositif de communication mobile et le second dispositif de communication mobile sur la base du premier emplacement géographique et du second emplacement géographique.

2. Procédé selon la revendication 1, dans lequel la détermination du second emplacement géographique comprend les étapes suivantes :
recevoir, par l'intermédiaire du second réseau de communication, des secondes informations transmises par le second dispositif de communication mobile dans la troisième bande de fréquences, et représentatives d'un second identifiant du second dispositif de communication mobile et du second emplacement géographique ;
recevoir, par l'intermédiaire du premier réseau de communication, des secondes informations transmises par le second dispositif de communication mobile dans la troisième bande de fréquences, et représentatives d'un second identifiant du second dispositif de communication mobile et du second emplacement géographique, où le premier réseau de communication est configuré pour surveiller la troisième bande de fréquences ;
recevoir, par l'intermédiaire du second réseau de communication, des secondes informations transmises par le second dispositif de communication mobile dans la deuxième bande de fréquences, et représentatives d'un second identifiant du second dispositif de communication mobile et du second emplacement géographique ; ou
recevoir, depuis le second réseau de communication, des secondes informations générées par le second réseau de communication et indicatives du second emplacement géographique.

3. Procédé selon l'une quelconque des revendications précédentes, dans lequel la détermination du second emplacement géographique comprend au moins l'une des étapes suivantes :
utiliser un dispositif de navigation local par rapport au second dispositif de communication mobile ;
recevoir, au niveau du second dispositif de communication mobile, des secondes données en provenance du second réseau de communication pour déterminer le second emplacement géographique ;
recevoir une entrée d'utilisateur, indicative du second emplacement géographique, en provenance d'un utilisateur du second dispositif de communication mobile par l'intermédiaire d'une interface utilisateur du second dispositif de communication mobile ; et
recevoir, sans fil, des informations relatives au second emplacement géographique, depuis une balise spécifique parmi une ou plusieurs balises installées dans une région de présence du second dispositif de communication mobile.

4. Procédé selon l'une quelconque des revendications 1 à 3, dans lequel la réception des premières informations provenant du premier dispositif de communication mobile comprend de recevoir les premières informations dans le second réseau de communication dans la troisième bande de fréquences, où la base de données est éloignée du premier dispositif de communication mobile et du second dispositif de communication mobile et accessible par le second réseau de communication, et où la consultation de la base de données, la détermination du second emplacement géographique et la détermination de la proximité spatiale sont effectuées dans le second réseau de communication.

5. Procédé selon l'une quelconque des revendications 1 à 3, dans lequel la réception des premières informations en provenance du premier dispositif de communication mobile comprend de recevoir les premières informations dans le second dispositif de communication mobile dans la deuxième bande de fréquences, où la base de données est locale par rapport au second dispositif de communication mobile et accessible par le second dispositif de communication mobile, et où la consultation de la base de données, la détermination du second emplacement géographique et la détermination de la proximité spatiale sont effectuées dans le second dispositif de communication mobile.

6. Procédé selon la revendication 5, comprenant en outre de recevoir les premières informations dans le second réseau de communication dans la troisième bande de fréquences et de diffuser les premières informations par le second réseau de communication dans la deuxième bande de fréquences.

7. Procédé selon l'une quelconque des revendications précédentes, le procédé comprenant en outre au moins l'une des deux étapes suivantes :
notifier au premier dispositif de communication mobile la proximité spatiale par l'intermédiaire du premier réseau de communication utilisant la première bande de fréquences ; et
notifier au second dispositif de communication mobile la proximité spatiale par l'intermédiaire du second dispositif de communication utilisant la deuxième bande de fréquences.

8. Procédé selon la revendication 7, dans lequel la notification est effectuée sous le contrôle d'une condition prédéterminée, où la condition prédéterminée dépend d'au moins un des paramètres suivants :
le premier emplacement géographique ;
le second emplacement géographique ;
une première autorisation provenant du premier dispositif de communication mobile pour notifier au second dispositif de communication mobile ;
une deuxième autorisation provenant du premier dispositif de communication mobile pour notifier au premier dispositif de communication mobile ;
une troisième autorisation provenant du second dispositif de communication mobile pour notifier au premier dispositif de communication mobile ;
une quatrième autorisation provenant du second dispositif de communication mobile pour notifier au second dispositif de communication mobile ;
une heure de la journée ;
un jour de la semaine ;
une première identité du premier dispositif de communication mobile ; et
une seconde identité du second dispositif de communication mobile.

9. Second réseau de communication (110) configuré pour procéder à une détection de proximité entre un premier dispositif de communication mobile (102) et un second dispositif de communication mobile (108) pour permettre au premier dispositif de communication mobile et au second dispositif de communication mobile de mettre en place une session de communication de dispositif à dispositif, où :
le premier dispositif de communication mobile est connecté de manière communicative à un premier réseau de communication (104) pour recevoir un premier service de communication par l'intermédiaire du premier réseau de communication dans une première zone géographique (106) et dans une première bande de fréquences ;
le second dispositif de communication mobile est connecté de manière communicative à un second réseau de communication (110), différent du premier réseau de communication, pour recevoir un second service de communication par l'intermédiaire du second réseau de communication dans une seconde zone géographique (112) et dans une deuxième bande de fréquences ;
le premier dispositif de communication mobile est configuré pour transmettre des premières informations dans une troisième bande de fréquences, disjointe de la première bande de fréquences et disjointe de la deuxième bande de fréquences ;
les premières informations sont représentatives d'un premier identifiant du premier dispositif de communication mobile et d'un premier emplacement géographique du premier dispositif de communication mobile ;
où le second réseau de communication est configuré pour :
surveiller la troisième bande de fréquences ;
recevoir les premières informations du premier dispositif de communication mobile dans la troisième bande de fréquences ;
sous le contrôle du premier identifiant, consulter une base de données pour déterminer si le premier dispositif de communication mobile est répertorié comme étant associé au second dispositif de communication mobile ;
si le premier dispositif de communication mobile est répertorié comme étant associé au second dispositif de communication mobile, déterminer un second emplacement géographique du second dispositif de communication mobile ; et
déterminer la proximité spatiale entre le premier dispositif de communication mobile et le second dispositif de communication mobile sur la base du premier emplacement géographique et du second emplacement géographique.

10. Premier dispositif de communication mobile (102) configuré pour être utilisé avec le procédé de la revendication 1, dans lequel :
le premier dispositif de communication mobile est connecté de manière communicative au premier réseau de communication (104) pour recevoir le premier service de communication par l'intermédiaire du premier réseau de communication dans la première zone géographique (106) et dans la première bande de fréquences ; et
**caractérisé en ce que** le premier dispositif de communication mobile est configuré pour transmettre des premières informations au second réseau de communication dans la troisième bande de fréquences disjointe de la première bande de fréquences et disjointe de la deuxième bande de fréquences, où les premières informations sont représentatives d'un premier identifiant du premier dispositif de communication mobile et d'un premier emplacement géographique du premier dispositif de communication mobile.
